# FASCICULE DE BREVET EUROPEEN

(11) **EP 1 968 828 B1**
(45) Date de publication et mention de la délivrance du brevet: **21.07.2010**
(21) Numéro de dépôt: 06819938.9
(22) Date de dépôt: 11.12.2006
(51) Int. Cl.: B60S 1/40

(54) **BALAI D'ESSUIE-GLACE COMPORTANT UNE MONTURE DE SUPPORT, UNE VERTEBRE INTERNE ET UN ELEMENT DE LIAISON**
WISCHERBLATT MIT STÜTZHALTER, INNERER VERSTEIFUNGSLEISTE UND VERBINDUNGSELEMENT
WIPER BLADE COMPRISING A SUPPORT MOUNT, AN INTERNAL VERTEBRA AND A CONNECTING ELEMENT

(30) Priorité: 14.12.2005 FR 0512637
(43) Date de publication de la demande: 17.09.2008
(73) Titulaire: VALEO SYSTEMES D'ESSUYAGE, 78321 La Verrière (FR)
(72) Inventeur: BOUSSET, Xavier, F-63000 Clermont-Ferrand (FR)
(74) Mandataire: Rosolen-Delarue, Katell
(86) Numéro de dépôt international: PCT/EP2006/069560
(87) Numéro de publication internationale: WO 2007/068677

(56) Documents cités:
- DE-A1- 19 641 042
- DE-U1-202005 012 619
- FR-A- 2 854 852
- FR-A- 2 868 376

## Description

L'invention propose un balai d'essuie-glace de véhicule automobile du type "flat-blade" comportant un élément de liaison avec un bras d'entraînement qui réalise la fixation d'un élément structurel avec une monture de support.

L'invention propose plus particulièrement un balai d'essuie-glace de véhicule automobile, comportant :
- une monture de support d'orientation principale longitudinale, qui comporte des moyens de support d'une raclette d'essuyage et un corps tubulaire d'axe principal longitudinal;
- un élément structurel en forme de lame horizontale longitudinale, qui est reçu à l'intérieur du corps tubulaire ; et
- un élément de liaison du balai avec un bras d'entraînement, qui est monté sur la monture de support, et qui comporte des moyens de blocage pour bloquer l'élément structurel en position dans l'élément de liaison.

Selon une conception consistant à réaliser des balais d'essuie-glace de faible hauteur, la structure articulée du balai d'essuie-glace, qui porte la raclette ou lame d'essuyage est supprimée, et c'est l'association d'une monture de support creuse avec une vertèbre longitudinale de rigidification qui constitue la structure du balai proprement dit.

La monture de support est en forme de tronçon de profilé longitudinal qui comporte un corps tubulaire à l'intérieur duquel la vertèbre, qui est en forme de lame horizontale longitudinale est reçue. La monture comporte enfin des crochets inférieurs de montage de la raclette d'essuyage.

La vertèbre est réalisée en un matériau rigide, par exemple en acier, permettant de plaquer la raclette d'essuyage contre la surface vitrée à essuyer.

Le balai comporte aussi un élément de liaison du balai avec un bras d'entraînement en balayage, qui est monté autour du corps de la monture de support, et qui comporte des moyens de blocage pour bloquer la vertèbre en mouvement longitudinal en position montée à l'intérieur du corps de la monture de support.

Le document US-A-6.161.248 décrit un balai d'essuie-glace de type "flat-blade" pour lequel l'élément de liaison est relié à la vertèbre par des languettes élastiques qui sont reçues dans des gorges complémentaires de la vertèbre.

Le document FR-A-2 868 376 décrit un balai d'essuie-glace du type « flat-blade » dans lequel l'élément de liaison est connecté à la monture de support par des moyens de blocage composés de dents qui sont reçus dans des encoches réalisées dans les bords latéraux de la vertèbre.

Lors de différents tests sur ce dernier dispositif de fixation, des jeux sont apparus dans la tenue de l'élément de liaison sur la vertèbre. Cet inconvénient est notamment dû au positionnement relatif des dents vis-à-vis des encoches de la vertèbre, car, de par le jeu des tolérances sur les différents pièces ou sur le moyen d'assemblage, il est possible, si la référence de positionnement est réalisée par une première paire de dents que la deuxième paire de dents ne soient pas tout à fait en face des encoches associées.

Par ailleurs, et de manière incontournable industriellement, les découpes sur la vertèbre font apparaître sur les bords des angles vifs, et le contact d'une dent au niveau d'un angle vif créé une zone de contact localisée qui ne s'étend pas sur la totalité de le géométrie de la dent et de son encoche correspondante.

Ainsi, au fur et à mesure de l'utilisation du balai d'essuie-glace, les dents se déforment progressivement et de manière permanente du fait des jeux introduits, de sorte que l'efficacité du balai d'essuie-glace s'en trouve réduit.

L'invention a pour but de proposer un balai d'essuie-glace pour lequel les moyens de blocage de la vertèbre en position montée dans la monture de support sont suffisamment rigides pour ne pas se déformer progressivement, et qui permettent d'éviter tout jeu, aussi bien longitudinalement qu'angulairement, entre les différents éléments du balai d'essuie-glace.

Dans ce but, l'invention propose un balai d'essuie-glace avec les caractéristiques de la revendication 1.

Cette caractéristique permet notamment de séparer les fonctions de blocage pour assurer un blocage de l'élément structurel dans l'élément de liaison dans toutes les directions.

Selon d'autres caractéristiques de l'invention ;
- Les moyens de blocage longitudinaux comportent au moins un ergot qui est reçu dans une encoche réalisée dans l'élément structurel ;
- Les ergots sont au moins au nombre de deux, chacun étant reçu dans une encoche réalisée dans les bords latéraux de part et d'autre de l'élément structurel ;

- Chaque encoche est de forme globalement rectangulaire, complémentaire de l'ergot associé ;
- Les moyens de blocage angulaires comportent des dents de maintien qui coopèrent avec les bords latéraux de l'élément structurel ;
- L'extrémité transversale libre de chaque dent de maintien comporte une surface d'arrêt qui s'écrase sur le bord latéral de l'élément structurel lors du montage et/ou du sertissage de l'élément de liaison sur la monture de support ;
- Les ergots et les dents de maintien sont ménagés sur les pattes latérales de l'élément de liaison ;
- Chaque ergot et chaque dent de maintien s'étend transversalement vers l'intérieur de l'élément de liaison, depuis une face longitudinale verticale interne de la patte latérale associée ;
- À chaque ergot et dent de maintien est associé au moins un plot de maintien, disposés verticalement de part ou d'autre de l'ergot et/ou de la dent de maintien ;
- A chaque ergot et dent de maintien est associé une paire de plots de maintien, comprenant un plot supérieur et un plot inférieur disposés verticalement de part et d'autre de l'ergot et/ou de la dent de maintien ;
- La dent de maintien est située transversalement en retrait par rapport à chaque plot de maintien ;
- Les parois latérales du corps tubulaire comportent des premières et secondes ouvertures latérales qui sont respectivement traversées par l'ergot et la surface d'arrêt de la dent de maintien de l'élément de liaison ;
- Les premières et secondes ouvertures latérales sont réalisées par découpe de la paroi latérale préalablement au montage de l'élément de liaison (16) sur la monture de support.
- Chaque ouverture latérale comporte une entaille supérieure et une entaille inférieure dans lesquelles s'insèrent les plots de maintien supérieur et inférieur associés ;
- Chaque entaille et le plot de maintien associé sont de formes complémentaire

D'autres caractéristiques et avantages de l'invention apparaîtront à la lecture de la description détaillée qui suit pour la compréhension de laquelle on se reportera aux figures annexées parmi lesquelles :
- la figure 1 est une représentation en perspective éclatée d'un balai d'essuie-glace de type flat-blade généralement connu, dans laquelle les moyens de blocage disposés sur l'élément de liaison n'ont pas été représentés ;
- la figure 2 est une représentation schématique en perspective éclatée d'un balai d'essuie-glace comprenant un élément de liaison conforme à l'invention ;
- la figure 3 est vue en coupe horizontale du balai d'essuie-glace représenté à la figure 1, avant le montage de l'élément de liaison ;
- la figure 4 est une vue similaire à celle de la figure 2, dans laquelle l'élément de liaison est monté sur la monture de support, montrant les moyens de blocage en fonctionnement.

Pour la description de l'invention, on adoptera à titre non limitatif les orientations verticale, longitudinale et transversale selon le repère V, L, T indiqué aux figures.

Dans la description qui va suivre, des éléments identiques, similaires ou analogues seront désignés par les mêmes chiffres de référence.

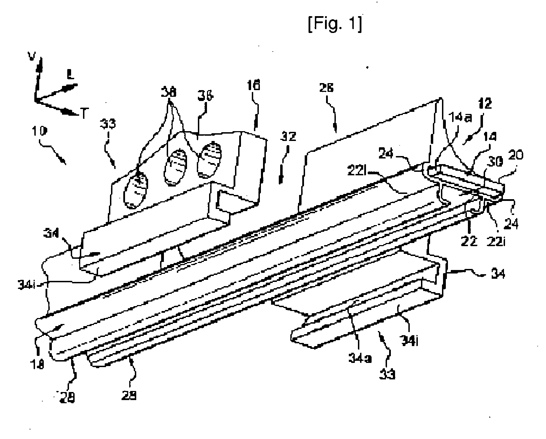

On a représenté à la figure 1 une structure générale connue d'un balai d'essuie-glace 10 de type "flat-blade", qui comporte une monture de support 12 d'orientation principale longitudinale, qui porte les autres composants du balai 10, une vertèbre interne 14 en forme de lame horizontale longitudinale, un élément de liaison 16 permettant de relier le balai d'essuie-glace 10 à un bras d'entraînement (non représenté) et une raclette d'essuyage (non représentée). L'élément de liaison 16 comprend des moyens de blocage pour le blocage de la vertèbre 14 à l'intérieur de la monture 12 qui n'ont pas été représentés sur la figure 1.

La monture 12 comporte un corps central 18 tubulaire d'axe principal longitudinal, qui est délimité par une paroi supérieure horizontale 20, une paroi inférieure horizontale 22, et par deux parois latérales longitudinales verticales 24.

Bien entendu, cette délimitation du corps tubulaire 18 n'est pas limitative. On peut en effet avoir un corps tubulaire dont la section a une forme circulaire ou elliptique dès lors que ce corps est apte à recevoir une vertèbre 14, quelque soit sa forme.

La monture 12 comporte aussi une nervure supérieure longitudinale 26, qui s'étend verticalement vers le haut depuis la face supérieure de la paroi supérieure horizontale 20 du corps 18, et qui est conformée aérodynamiquement de manière à générer des efforts d'appui du balai 10 sur la surface vitrée, sous l'action du vent relatif produit par le déplacement du véhicule.

Enfin, la monture de support 12 comporte des moyens inférieurs de montage de la raclette d'essuyage, qui consiste ici en deux crochets inférieurs longitudinaux 28 en vis-à-vis, et qui délimitent un corps tubulaire 30 ouvert vers le bas, dans lequel un dos supérieur complémentaire de la raclette est monté.

La vertèbre 14 constitue l'élément structurel du balai 10, qui rigidifie la monture 12. La vertèbre. 14 est réalisée en un matériau relativement rigide, par exemple en acier ou en matériau composite, et elle consiste en une lame horizontale longitudinale qui est agencée à l'intérieur du corps tubulaire 18.

L'élément de liaison 16 est monté longitudinalement globalement au milieu de la monture 12, en chevauchant le corps 18 de la monture 12, c'est-à-dire qui s'étend au-dessus de la paroi supérieure horizontale 20, et de part et d'autre des parois latérales 24.

La nervure supérieure 26 comporte une ouverture 32 au travers de laquelle l'élément de liaison 16 est monté sur la monture 12.

L'élément de liaison 16 est formé en deux parties 33 identiques et qui sont montées, dans un agencement où elles sont mises l'une en face de l'autre, sur le corps 18 selon un mouvement transversal.

Chaque partie 33 de l'élément de liaison 16 comporte une embase supérieure 36 qui est en appui sur la face supérieure de la paroi supérieure horizontale 20 du corps 18, et qui comporte des moyens 38 de fixation à l'embase supérieure 36 de l'autre partie 33 de l'élément de liaison 16.

Les moyens de fixation 38 comportent, notamment, un alésage et un fût par partie 33 de l'élément de liaison 16.

L'élément de liaison 16 comporte aussi deux pattes latérales inférieures 34, chacune s'étendant vers le bas depuis une embase supérieure 36 de la partie 33 associée, et qui sont réparties transversalement de part et d'autre du corps 18 de la monture 12, de manière à réaliser le positionnement transversal de l'élément de liaison 16 par rapport au corps 18.

L'extrémité inférieure libre 34i de chaque patte latérale 34 est recourbée vers l'intérieur de l'élément de liaison 16, en constituant un crochet s'étend en regard de la face inférieure 22i de la paroi inférieure horizontale 22 du corps 18. L'extrémité inférieure 34i de chaque patte latérale 34 permet ainsi de réaliser le blocage vertical de l'élément de liaison 16 en position montée autour du corps 18.

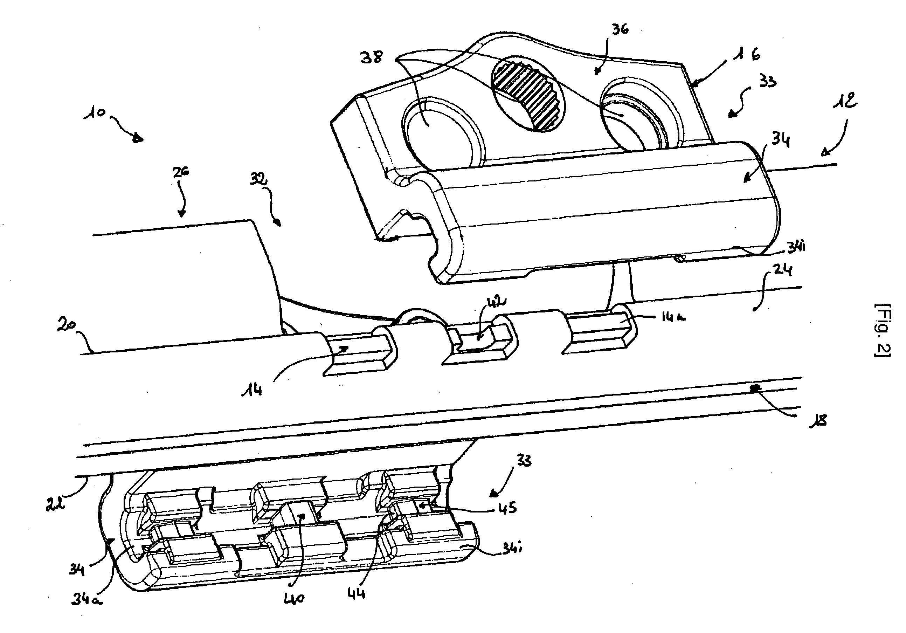

Comme visible sur la figure 2, l'élément de liaison 16 comporte des moyens de blocage pour le blocage de la vertèbre 14 en position montée à l'intérieur du corps creux 18 de la monture de support 12.

Les moyens de blocage de l'élément de liaison 16 sont de deux types :
- des moyens de blocage longitudinaux, et
- des moyens de blocage angulaires,

La combinaison de ces deux types de moyens de blocage permet une tenue de la vertèbre 14 en position dans le corps 18 dans l'ensemble des directions.

Les moyens de blocage longitudinaux comportent au moins un ergot transversal interne 40, disposé sur chacune des parties 33 de l'élément de liaison 16. Cet ergot 40 coopère avec une encoche 42 pratiquée dans la vertèbre 14 pour réaliser le blocage longitudinal de la vertèbre 14 en position montée dans le corps 18 de la monture.

Les ergots 40 sont ménagés sur les pattes latérales 34.

Les encoches 42, qui reçoivent les ergots 40, sont réalisées dans les bords latéraux 14a de la vertèbre 14, et selon un mode de réalisation de l'invention, les encoches 42 sont de forme complémentaire des ergots 40, par exemple rectangulaire.

Ici, chaque patte latérale 34 comporte un ergot 40 et chaque bord latéral 14a de la vertèbre 14 comporte par conséquent une encoche 42.

Chaque ergot 40 s'étend transversalement vers l'intérieur de l'élément de liaison 16, depuis une face longitudinale verticale interne 34a de la patte latérale 34 associée, et son extrémité libre interne est reçue dans l'encoche associée 42 de la vertèbre 14.

Les ergots 40 permettent un positionnement aisé de l'élément de liaison 16 sur la monture et leur coopération avec les encoches 42 assure un bon maintien mécanique longitudinal de la vertèbre 14 dans l'élément de liaison 16.

Les moyens de blocage angulaires comportent des dents de maintien transversales internes 44, disposées sur chacune des parties 33 de l'élément de liaison 16, qui coopèrent avec les bords latéraux 14a de la vertèbre 14. Chaque dent de maintien 44 comporte une surface d'arrêt 45 qui est destinée à venir en contact avec un bord latéral de la vertèbre lors du montage.

Ici, chaque patte latérale 34 comporte deux dents 44 disposées de part et d'autre de l'ergot 40, et chaque bord latéral 14a de la vertèbre 14 comporte par conséquent deux zones de contact.

Chaque dent 44 s'étend transversalement vers l'intérieur de l'élément de liaison 16, depuis la face longitudinale verticale interne 34a de la patte latérale 34 associée, et sa surface d'arrêt 45 vient s'écraser sur le bord latéral 14a de la vertèbre lors du montage et/ou du sertissage de l'élément de liaison 16 sur la monture 12.

L'écrasement des dents 44 sur les flancs de la vertèbre permet d'obtenir un bon maintien en torsion en cas de mouvement angulaire entre la monture 12 et l'élément de liaison 16 ainsi q'un maintien vertical de la vertèbre dans la monture.

Cette séparation des fonctions de maintien selon les directions permet d'adapter les moyens de blocage à la direction de maintien souhaitée et améliore la qualité et les performances de la tenue de la connexion entre l'élément de liaison 16 et la monture 12.

Dans cet agencement, le centre de l'encoche 42, constitue la référence pour la réalisation de l'encoche 42 et pour l'assemblage du balai. Cet agencement avec une paire d'ergot 40 coopérant avec une paire d'encoche 42 ne nécessite pas alors de prévoir de tolérances ou de jeux particuliers pour la fabrication et l'assemblage de l'élément de liaison 16 sur la monture 12.

De plus, pour réaliser le maintien du corps 18 par rapport à l'élément de liaison 16, il est prévu d'associer à chaque ergot 40 et dent 44 au moins un plot de maintien et de préférence une paire de plots de maintien 58, 60, chaque plot étant disposé verticalement de part et d'autre de l'ergot ou de la dent sur la face interne 34a de la patte latérale 34 associée.

Ces plots 58, 60, de forme globalement rectangulaire, permettent dans leur coopération avec le bord latéral 14a de la vertèbre 14, d'aider au positionnement de l'élément de liaison 16 sur la monture 12 et de maintenir le corps 18 par rapport à l'élément de liaison 16.

Ainsi, les plots de maintien supérieur 58 et inférieur 60 associés à un ergot 40 et/ou à une dent de maintien 44 sont agencés verticalement de part et d'autre de la vertèbre 14, réalisant le positionnement vertical et longitudinal de la vertèbre 14 par rapport à l'élément de liaison 16.

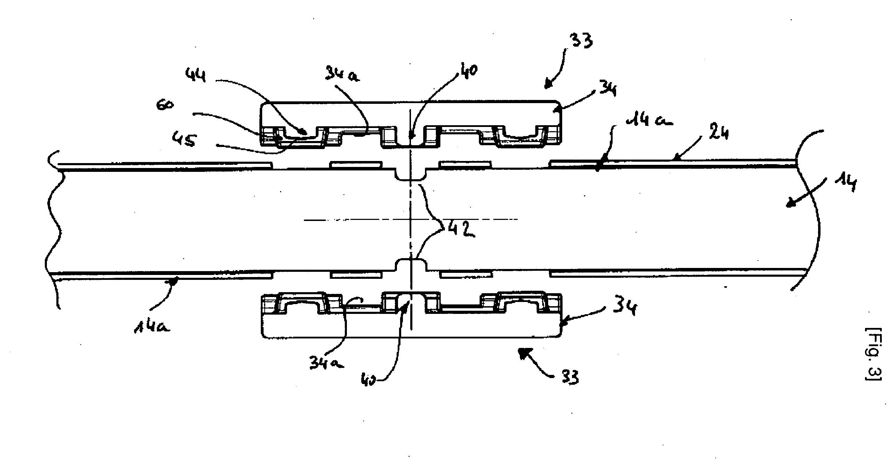

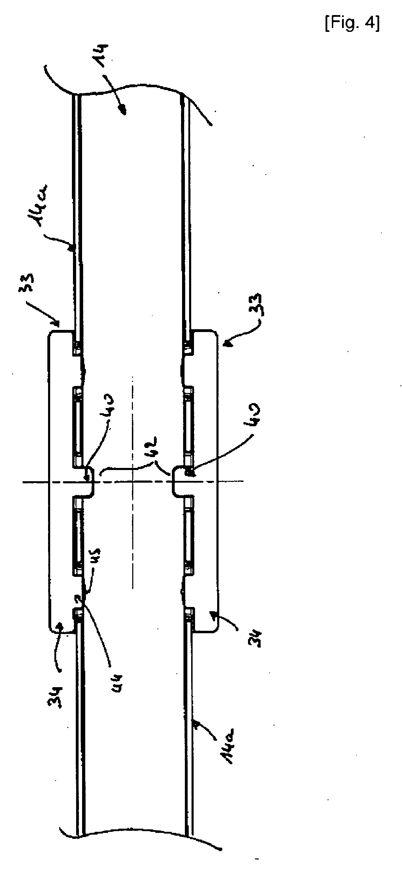

On a représenté aux figures 3 et 4, en vue en coupe, l'élément de liaison 16, avant et après montage sur la monture 12.

Avant montage, les deux parties 33 de l'élément de liaison 16 sont positionnées de part et d'autre et en regard des bords latéraux 14a de la vertèbre 14 de sorte que les ergots 40 sont en correspondance avec les encoches 42

Les dents 44 pourvues de leur surface d'arrêt 45 sont disposées de part et d'autre de chaque ergot 40 en regard des bords latéraux de la vertèbre 14.

Après montage de l'élément 16 sur la monture 12 et fixation des deux parties 33, par sertissage par exemple, ou par utilisation des moyens de fixation 38, les ergots 40 sont reçus dans les encoches 42 et les surface d'arrêt 45 des dents 44 sont écrasées contre les bords latéraux 14a de la vertèbre. 14.

Par ailleurs, comme visible notamment sur les figures 2 et 3, les parois latérales 24 du corps 18 comportent des premières 46a et des secondes 46b ouvertures latérales destinées à coopérer avec les ergots 40 et dents 44 disposés sur l'élément de liaison 16.

Ces ouvertures latérales permettent un accès direct à la vertèbre. 14 et à ses bords latéraux 14a pour la maintenir ou pour venir en appui contre celle-ci.

Chaque première ouverture latérale 46a est située en vis-à-vis de chaque encoche 42, et est traversée par l'ergot 40 associé de l'élément de liaison 16.

L'ergot 40 est ainsi reçu dans le fond de l'encoche 42 associée, améliorant ainsi le blocage longitudinal de la vertèbre 14 par rapport à l'élément de liaison 16.

Les secondes ouvertures latérales 46b sont disposées de part et d'autre d'une première ouverture latérale 46a et traversées par la surface d'arrêt 45 de la dent de maintien 44 associée.

La dent 44 vient ainsi se positionner au niveau de l'ouverture latérale 46b et la surface d'arrêt 45 vient s'écraser contre le flanc du bord latéral 14a de la vertèbre 14.

Ces ouvertures latérales permettent donc un accès direct à la vertèbre 14 et à ses bords latéraux 14a pour la maintenir ou pour venir en appui contre celle-ci.

Les premières et secondes ouvertures latérales 46a et 46b sont réalisées préalablement au montage de l'élément de liaison 16 sur la monture 12, lors de la réalisation de la monture 12, par moulage ou co-extrusion, ou bien par découpage.

Comme visible sur la figure 2, les ouvertures latérale 46a et 46b comportent, par ailleurs, une entaille supérieure 52, réalisée dans la paroi horizontale supérieure 20, qui s'étend transversalement vers l'intérieur de la monture 12 et une entaille inférieure 56 réalisée dans la paroi inférieure horizontale 22 et qui s'étend également transversalement vers l'intérieur de la monture 12.

Dans la pratique, chaque paire d'entaille constituée d'une entaille supérieure 52 et d'une entaille inférieure 56 forme une ouverture unique avec les premières et secondes ouvertures latérales 46a, 46b.

Les plots de maintien supérieur 58 (non visibles sur les figures 3 et 4 du fait de la vue en coupe) et inférieur 60 sont complémentaires de l'entaille supérieure 52 et inférieure 56 respective, ce qui permet d'assurer un positionnement horizontal sans jeu de la monture de support 12 par rapport à l'élément de liaison 16.

Ici, comme on peut le visualiser à la figure 2, l'entaille supérieure 52 et le plot supérieur 58 complémentaire, sont de forme globalement rectangulaire.

De plus, les dents 44 s'étendent transversalement en retrait par rapport aux plots supérieurs 58 et inférieurs 60.

Le bord latéral 14a de la vertèbre 14 est ainsi reçu entre les plots supérieur 58 et inférieur 60, réalisant ainsi le positionnement vertical de la vertèbre 14 à l'intérieur du corps 18, notamment pour maintenir la vertèbre 14 en position horizontale.

Cette séparation des fonctions de maintien longitudinales et angulaires permet des découpes simplifiées au niveau de la vertèbre 14 et des ouvertures latérales 46a et 46b ainsi qu'un positionnement aisé des pièces lors de l'assemblage du balai d'essuie-glace.

## Revendications

1. Balai d'essuie-glace (10) de véhicule automobile, comportant
- une monture de support (12) d'orientation principale longitudinale, qui comporte des moyens (28) de support d'une raclette d'essuyage et un corps tubulaire (18) d'axe principal longitudinal délimité par une paroi horizontale supérieure (20), une paroi horizontale inférieure (22) et par deux parois latérales longitudinales verticales (24) ;
- un élément structurel (14) en forme de lame horizontale longitudinale, qui est reçu à l'intérieur du corps tubulaire (18) ; et
- un élément de liaison (16) du balai (10) avec un bras d'entraînement, qui est monté sur la monture de support (12) par l'intermédiaire de deux pattes latérales (34) longitudinales verticales qui s'étendent de part et d'autre des parois latérales (24) du corps tubulaire (18), et qui comporte des moyens de blocage pour bloquer l'élément structurel (14) en position dans l'élément de liaison (16),
**caractérisé en ce que** les moyens de blocage de l'élément de liaison (16) sont ménagés sur les pattes latérales (34) de l'élément de liaison (16) et comportent, d'une part, des moyens de blocage longitudinaux de l'élément structurel (14) en position, et d'autre part, des moyens de blocage angulaires de l'élément structurel (14) en position, lesdits moyens de blocage étant fonctionnellement séparés et distants l'un de l'autre sur les pattes latérales (34).

2. Balai d'essuie-glace selon la revendication 1, dans lequel, les moyens de blocage longitudinaux comportent au moins un ergot (40) qui est reçu dans une encoche (42) pour immobiliser longitudinalement l'élément structurel (14) par rapport à l'élément de liaison (16).

3. Balai d'essuie-glace selon la revendication 2, **caractérisé en ce que**, les moyens de blocage longitudinaux comportent au moins deux ergots (40) qui sont chacun reçu dans une encoche (42) réalisée dans les bords latéraux (14a) de part et d'autre de l'élément structurel (14)

4. Balai (10) d'essuie-glace selon la revendication précédente, **caractérisé en ce que** chaque encoche (42) de l'élément structurel (14) est de forme globalement rectangulaire, complémentaire de l'ergot (40) associé.

5. Balai d'essuie-glace selon l'une quelconque des revendications 1 à 4, dans lequel, les moyens de blocage angulaires comportent des dents de maintien (44) qui coopèrent avec les bords latéraux (14a) de l'élément structurel (14) pour immobiliser angulairement l'élément structurel (14) par rapport à l'élément de liaison (16).

6. Balai (10) d'essuie-glace selon la revendication précédente, **caractérisé en ce que** l'extrémité transversale libre de chaque dent de maintien (44) comporte une surface d'arrêt (45) qui s'écrase sur le bord latéral (14a) de l'élément structurel (14) lors du montage et/ou du sertissage de l'élément de liaison (16) sur la monture de support (12).

7. Balai d'essuie-glace selon les revendications 2 et 5 prises ensemble, **caractérisé en ce que** les ergots (40) et les dents de maintien (44) sont ménagés sur les pattes latérales (34) de l'élément de liaison (16).

8. Balai (10) d'essuie-glace selon la revendication précédente, **caractérisé en ce que** chaque ergot (40) et chaque dent de maintien (44) s'étend transversalement vers l'intérieur de l'élément de liaison (16), depuis une face longitudinale verticale interne (34a) de la patte latérale (34) associée.

9. Balai (10) d'essuie-glace selon la revendication 7 ou 8, **caractérisé en ce que** à chaque ergot (40) et dent de maintien (44) est associé au moins un plot (58,60) de maintien, disposé verticalement de part ou d'autre de l'ergot (40) et/ou de la dent de maintien (44) sur la patte latérale (34) pour réaliser le maintien du corps tubulaire (18) par rapport à l'élément de liaison (16).

10. Balai (10) d'essuie-glace selon la revendication précédente, **caractérisé en ce que** à chaque ergot (40) et dent de maintien (44) est associé une paire de plots (58,60) de maintien, comprenant un plot supérieur (58) et un plot inférieur (60), disposés verticalement de part et d'autre de l'ergot (40) et/ou de la dent de maintien (44).

11. Balai (10) d'essuie-glace selon la revendication 7 ou 8, **caractérisé en ce que** la dent de maintien (44) est située transversalement en retrait par rapport à chaque plot (58,60) de maintien.

12. Balai (10) d'essuie-glace selon l'une quelconque des revendications 2 à 6, **caractérisé en ce que** les parois latérales (24) du corps tubulaire (18) comportent au moins une première ouverture latérale (46a) qui est située en vis-à-vis de chaque encoche (42) de l'élément structurel (14), et qui est traversée par l'ergot (40) associé.

13. Balai (10) d'essuie-glace selon l'une quelconque des revendications 2 à 6, **caractérisé en ce que** les parois latérales (24) du corps tubulaire (18) comportent au moins deux secondes ouvertures latérales (46b) qui sont situées de part et d'autre de la première ouverture latérale (46a), et qui sont chacune traversée par la surface d'arrêt (45) de la dent de maintien (44) associée.

14. Balai (10) d'essuie-glace selon les revendications 12 et 13, **caractérisé en ce que** les premières et secondes ouvertures latérales (46a, 46b) sont réalisées par découpe de la paroi latérale (24) associée du corps tubulaire (18), préalablement au montage de l'élément de liaison (16) sur la monture de support (12).

15. Balai (10) d'essuie-glace selon la revendication précédente, **caractérisé en ce que** chaque ouverture latérale (46a, 46b) comporte une entaille supérieure (52) et une entaille inférieure (56) respectivement réalisée dans la paroi horizontale supérieure (20), inférieure (22) du corps (18), et **en ce que** les plots de maintien supérieur (58) et inférieur (60) associés à chaque ergot (40) et/ou dent de maintien (44) sont respectivement reçus dans ladite entaille supérieure (52), inférieure (56), pour positionner longitudinalement l'élément de liaison (16) par rapport à la monture de support (12).

16. Balai (10) d'essuie-glace selon la revendication précédente, **caractérisé en ce que** chaque entaille (52, 56) et le plot de maintien (58, 60) associé sont de formes complémentaires.

## Claims

1. A motor vehicle wiper blade (10), comprising:
- a support mount (12) having a longitudinal main direction, which comprises means for supporting a wiping blade and a tubular body (18) having a longitudinal main axis delimited by an upper horizontal wall (20), a lower horizontal wall (22) and by two vertical longitudinal side walls (24);
- a structural element (14) in the form of a longitudinal horizontal strip which is accommodated inside a tubular body (18); and
- an element (16) for connecting the blade (10) to a drive arm which is mounted on the support mount (12) through two vertical longitudinal side lugs (34) which extend on either side of the side walls (24) of the tubular body (18), and which comprises locking means for looking the structural element (14) in position in the connecting elements (16),
**characterised in that** the locking means of the connecting element (16) are provided on the side lugs (34) of the connecting element (16) and comprise, on the one hand, longitudinal means for locking the structural element (14) in position and, on the other hand, angular means for locking the structural element in position, said locking means being operationally separated and distant from each other on the side lugs (34).

2. A wiper blade according to claim 1, wherein the longitudinal locking means comprise at least one pin (40) which is accommodated in a notch (42) for longitudinally locking the structural element (14) with respect to the connecting element (16).

3. A wiper blade according to claim 2, **characterised in that** the longitudinal locking means comprise at least 2 pins (40) which are, each, accommodated in one notch (42) provided in the side edges (14a), on either side of the structural element (14).

4. A wiper blade (10) according to the preceding claim, **characterised in that** each notch (42) of the structural element (14) has a globally rectangular shape, which matches the associated pin (40).

5. A wiper blade according to any one of claims 1 to 4, wherein the angular locking means comprise holding teeth (44), which cooperate with the side edges (14a) of the structural element (14) for angularly locking the structural element (14) with respect to the connecting element (16).

6. A wiper blade (10) according to the preceding claim, **characterised in that** the transversal free end of each holding tooth (44) comprises a stop surface (45) which abuts against the side edge (14a) of the structural element (14) during the mounting and/or the crimping of the connecting element (16) onto the support mount (12).

7. A wiper blade according to claims 2 and 5 taken together, **characterised in that** the pins (40) and holding teeth (44) are arranged on the side lugs (34) of the connecting element (16).

8. A wiper blade (10) according to the preceding claim, **characterised in that** each pin (40) and each holding tooth transversely extends towards the inside of the connecting element (16) from an internal vertical longitudinal face (34a) of the associated lateral lug (34).

9. A wiper blade (10) according to claim 7 or 8, **characterised in that** with each pin 40 and each holding tooth (44) is associated at least a retaining pad (58, 60), vertically positioned on either side of the pin (40) and/or the holding tooth (44) on the side lug (34) to provide the holding of the tubular body (18) with respect to the connecting element (16).

10. A wiper blade (10) according to the preceding claim, **characterised in that** with each pin (40) and holding tooth (44) is associated a pair of holding pads (58, 60,) comprising an upper pad (58) and a lower pad (60) vertically positioned on either side of the pin (40) and/or the holding tooth (44).

11. A wiper blade (10) according to claim 7 or 8, **characterised in that** the holding tooth (44) is positioned transversely back from each holding pad (58, 60).

12. A wiper blade (10) according to any one of claims 2 to 6, **characterised in that** the side walls (24) of the tubular body (18) comprise at least a first side opening (46a) which is positioned opposite each notch (42) of the structural element (14) and which is gone through by the associated pin (40).

13. A wiper blade (10) according to any one of claims 2 to 6, **characterised in that** the side walls (24) of the tubular body (18) comprise at least two second side openings (46b) which are positioned on either side of the first side opening of (46a) and which are each gone through by the top surface (45) of the associated holding tooth (44).

14. A wiper blade (10) according to claims 12 and 13, **characterised in that** the first and second side openings (46a, 46b) are provided by cutting the associated side wall (24) of the tubular body (18) prior to the mounting of the connecting element (16) on the support mount (12).

15. A wiper blade (10) according to the preceding claim, **characterised in that** each side opening (46a,46b) comprises an upper cut (52) and a lower cut (56) provided respectively in the upper (20) and lower (22) horizontal walls of the body (18) and **in that** the upper (58) and lower (60) holding pads associated to each pin (40) and/or holding tooth (44) are respectively accommodated in said upper (52) and lower (56) cuts in order to longitudinally position the connecting element (16) with respect to the support mount (12).

16. A wiper blade (10) according to the preceding claim, **characterised in that** each cut (52, 56) and the associated holding pad (56, 60) have matching shapes.

## Patentansprüche

1. Scheibenwischerblatt (10) für ein Kraftfahrzeug, das folgende Teile umfaßt:
- einen Stützrahmen (12) mit hauptsächlicher Längsausrichtung, der Stützmittel (28) eines Wischergummis und einen röhrenförmigen Körper (18) mit Hauptlängsachse umfaßt, die von einer oberen horizontalen Wand (20), einer unteren horizontalen Wand (22) und durch zwei senkrechte Längsseitenwände (24) begrenzt wird;
- ein Strukturelement (14) in Form eines horizontalen Längsblatts, das im Innern des röhrenförmigen Körpers (18) aufgenommen wird;
- ein Verbindungselement (16) des Scheibenwischerblatts (10) mit einem Antriebsarm, der vermittels zweier senkrechter seitlicher Längslaschen (34) auf den Stützrahmen (12) montiert ist, die sich zu beiden Seiten der Seitenwände (24) des röhrenförmigen Körpers (18) erstrecken, und das das Sperrmittel für das Sperren des Strukturelements (14) in Position im Verbindungselement (16) umfaßt,
**dadurch gekennzeichnet, daß** die Sperrmittel des Verbindungselements (16) auf den seitlichen Laschen (34) des Verbindungselements (16) gestaltet sind und einerseits Längssperrmittel des Strukturelements (14) in Position umfassen, und andererseits Winkelsperrmittel des Strukturelements (14) in Position, wobei die besagten Sperrmittel funktional getrennt und auf den seitlichen Laschen (34) voneinander entfernt sind.

2. Scheibenwischerblatt nach Anspruch 1, bei dem die Längssperrmittel zumindest einen Nocken (40) umfassen, der in einer Kerbe (42) aufgenommen wird, um das Strukturelement (14) im Verhältnis zum Verbindungselement (16) längs zu immobilisieren.

3. Scheibenwischerblatt nach Anspruch 2, **dadurch gekennzeichnet, daß** die Längssperrmittel zumindest zwei Nocken (40) umfassen, die in einer Kerbe (42) aufgenommen werden, die in den Seitenkanten (14a) zu beiden Seiten des Strukturelements (14) ausgeführt sind.

4. Scheibenwischerblatt (10) nach dem vorstehenden Anspruch, **dadurch gekennzeichnet, daß** jede Kerbe (42) des Strukturelements (14) eine insgesamt rechteckige Form ergänzend zum entsprechenden Nocken (40) hat.

5. Scheibenwischerblatt (10) nach einem beliebigen der vorstehenden Ansprüche 1 bis 4, bei dem die Winkelsperrmittel Haltezähne (44) umfassen, die mit den Seitenkanten (14a) des Strukturelements (14) zusammenwirken, um das Strukturelement (14) im Verhältnis zum Verbindungselement (16) winkelig zu immobilisieren.

6. Scheibenwischerblatt (10) nach dem vorstehenden Anspruch, **dadurch gekennzeichnet, daß** das freie Querelement jedes Haltezahns (44) eine Haltefläche (45) umfaßt, die sich bei der Montage und/oder dem Bördeln des Verbindungselements (16) auf den Stützrahmen (12) auf die Seitenkante (14a) des Strukturelements (14) drückt.

7. Scheibenwischerblatt nach den vorstehenden Ansprüchen 2 und 5 gemeinsam genommen, **dadurch gekennzeichnet, daß** die Nocken (40) und die Haltezähne (44) auf den seitlichen Laschen (34) des Verbindungselements (16) gestaltet sind.

8. Scheibenwischerblatt (10) nach dem vorstehenden Anspruch, **dadurch gekennzeichnet, daß** sich jeder Nocken (40) und jeder Haltezahn (44) quer zum Innern des Verbindungselements (16) erstreckt, und dies ab einer inneren senkrechten Längsseite (34a) der zugehörigen seitlichen Lasche (34).

9. Scheibenwischerblatt (10) nach Anspruch 7 oder 8, **dadurch gekennzeichnet, daß** jedem Nocken (40) und Haltezahn (44) mindestens ein Halteklotz (58, 60) zugeordnet wird, der senkrecht auf der einen oder der anderen Seite des Nockens (40) und/oder des Haltezahns (44) auf der seitlichen Lasche (34) angeordnet ist, um die Halterung des rohrförmigen Körpers (18) im Verhältnis zum verbindungselement (16) zu realisieren.

10. Scheibenwischerblatt (10) nach dem vorstehenden Anspruch, **dadurch gekennzeichnet, daß** jedem Nocken (40) und Haltezahn (44) ein Paar Haltekl6tze (58, 60) zugeordnet wird, das einen oberen Klotz (58) und einen unteren Klotz (60) umfaßt, die senkrecht zu beiden Seiten des Nockens (40) und/oder des Haltezahns (44) angeordnet sind.

11. Scheibenwischerblatt (10) nach Anspruch 7 oder 8, **dadurch gekennzeichnet, daß** sich der Haltezahn (44) im Verhältnis zu jedem Halteklotz (58, 60) quer zurückgesetzt befindet.

12. Scheibenwischerblatt (10) nach einem beliebigen der vorstehenden Ansprüche 2 bis 6, **dadurch gekennzeichnet, daß** die Seitenwände (24) des röhrenförmigen Körpers (18) mindestens eine erste seitliche Öffnung (46a) umfassen, die sich gegenüber jeder Kerbe (42) des Strukturelements (14) befindet, und die vom zugehörigen Nocken (40) durchquert wird.

13. Scheibenwischerblatt (10) nach einem beliebigen der vorstehenden Ansprüche 2 bis 6, **dadurch gekennzeichnet, daß** die Seitenwände (24) des röhrenförmigen Körpers (18) mindestens zwei zweite seitliche Öffnungen (46b) umfassen, die sich zu beiden Seiten der ersten Seitenöffnung (46a) befinden, und von denen jede von der Haltefläche (45) des zugehörigen Haltezahns (44) durchquert wird.

14. Schelbenwischerblatt (10) nach den Ansprüchen 12 und 13, **dadurch gekennzeichnet, daß** die ersten und zweiten Seitenöffnungen (46a, 46b) durch Ausstanzen der zum röhrenförmigen Körper (18) gehörigen Seitenwand (24) ausgeführt werden, und dies vor der Montage des Verbindungselements (16) auf den Stützrahmen (12).

15. Scheibenwischerblatt (10) nach dem vorstehenden Anspruch, **dadurch gekennzeichnet, daß** jede Seitenöffnung (46a, 46b) einen oberen Einschnitt (52) und einen unteren Einschnitt (56) umfaßt, der in der oberen (20) beziehungsweise der unteren horizontalen Wand (22) des Körpers (18) ausgeführt ist, und **dadurch**, daß der jedem Nocken (40) und/oder Haltezahn (44) zugeordnete obere (58) und der untere Halzeklotz (60) im besagten oberen (52) oder unteren Einschnitt (56) aufgenommen wird, um das Verbindungselement (16) im Verhältnis zum Stützrahmen (12) längs zu positionieren.

16. Scheibenwischerblatt (10) nach dem vorstehenden Anspruch, **dadurch gekennzeichnet**, das jeder Einschnitt (52, 56) und der zugehörige Halteklotz (58, 60) sich ergänzende Formen haben.
